# NEUE EUROPÄISCHE PATENTSCHRIFT

(11) **EP 0 882 074 B2**
(45) Veröffentlichungstag und Bekanntmachung des Hinweises auf die Entscheidung über den Einspruch: **05.09.2007**
(45) Hinweis auf die Patenterteilung: 06.10.1999
(21) Anmeldenummer: 97903320.6
(22) Anmeldetag: 19.02.1997
(51) Int. Cl.: C08F 8/30, C08K 5/17, D04H 1/64, D06M 15/263, D06N 3/04

(54) **FORMALDEHYDFREIE, WÄSSRIGE BINDEMITTEL**
FORMALDEHYDE-FREE AQUEOUS BINDERS
LIANT AQUEUX EXEMPT DE FORMALDEHYDE

(30) Priorität: 21.02.1996 DE 19606394
(43) Veröffentlichungstag der Anmeldung: 09.12.1998
(73) Patentinhaber: BASF Aktiengesellschaft, 67056 Ludwigshafen (DE)
(72) Erfinder: HUMMERICH, Rainer, D-67551 Worms (DE); KISTENMACHER, Axel, D-67098 Bad Dürkheim (DE); DENZINGER, Walter, D-67346 Speyer (DE); SCHORNICK, Gunnar, D-67271 Neuleiningen (DE); RECK, Bernd, D-67269 Grünstadt (DE); WEBER, Manfred, D-68199 Mannheim (DE)
(86) Internationale Anmeldenummer: PCT/EP1997/000770
(87) Internationale Veröffentlichungsnummer: WO 1997/031036

(56) Entgegenhaltungen:
- EP-A- 0 116 930
- EP-A- 0 445 578
- EP-A- 0 583 086
- DE-A- 1 720 712
- DE-A- 2 214 450
- DE-A- 2 357 951
- DE-A- 4 408 688
- DE-C- 864 151
- US-A- 3 857 803
- US-A- 5 340 868
- US-A- 5 427 587
- PATENT ABSTRACTS OF JAPAN vol. 014, no. 220 (C-0717), 10.Mai 1990 & JP 02 051531 A (NIPPON OIL & FATS CO LTD), 21.Februar 1990,
- PATENT ABSTRACTS OF JAPAN vol. 005, no. 180 (C-079), 19.November 1981 & JP 56 104905 A (NIPPON ZEON CO LTD;OTHERS: 01), 21.August 1981,

## Beschreibung

Die Erfindung betrifft die Verwendung von formaldehydfreien, wäßrigen Bindemitteln, enthaltend
A) ein durch radikalische Polymerisation erhaltenes Polymerisat, welches zu 5 bis 100 Gew.-% aus einem ethylenisch ungesättigten Dicarbonsäureanhydrid oder einer ethylenisch ungesättigten Dicarbonsäure, deren Carbonsäuregruppen eine Anhydridgruppe bilden können, besteht und
B) ein Alkanolamin mit mindestens zwei Hydroxylgruppen, wobei das wäßrige Bindemittel weniger als 1,5 Gew.-%, bezogen auf die Summe von A) + B), eines Phosphor enthaltenden Reaktionsbeschleunigers enthält, als Bindemittel für Faservliese.

Weiter betrifft die Erfindung formaldehydfreie, wäßrige Bindemittel, enthaltend
A) ein durch radikalische Polymerisation erhaltenes Polymerisat, welches zu 5 bis 100 Gew.-% aus einem ethylenisch ungesättigten Dicarbonsäureanhydrid oder einer ethylenisch ungesättigten Dicarbonsäure, deren Carbonsäuregruppen eine Anhydridgruppe bilden können, besteht und welches als wäßrige Lösung vorliegt und
B) ein Alkanolamin mit mindestens zwei Hydroxylgruppen, wobei das wäßrige Bindemittel weniger als 1,5 Gew-%, bezogen auf die Summe von A) + B), eines Phosphor enthaltenden Reaktionsbeschleunigers enthält und wobei
die Bindemittel nach Trocknung (bei 50°C, Dauer 72 Stunden) zu einem Film der Dicke 0,3 bis 1 mm und anschließender 15-minütiger Härtung bei 130°C an der Luft einen Gelgehalt über 50 Gew.-% haben.

Die Verfestigung von flächenförmigen Fasergebilden, sog. Faservliesen, erfolgt zum Beispiel rein mechanisch durch Vernadelung oder Wasserstrahlverfestigung eines naß- oder luftgelegten Vlieses oder durch chemische Verfestigung der Vliese mit einem polymeren Bindemittel. Die Bindemittelapplikation erfolgt in der Regel durch Imprägnieren, Sprühen oder Beschichten. Zur Erhöhung der Naß- und Wärmestandfestigkeit der Vliese werden vielfach Bindemittel, welche Formaldehyd abspaltende Vernetzer enthalten, eingesetzt. Zur Vermeidung von Formaldehydemissionen ist der Fachmann bestrebt, Alternativen zu den bisher bekannten Bindemitteln zur Verfügung zu stellen.

Aus der US 4 076 917 sind Bindemittel bekannt, welche carbonsäure- oder anhydridhaltige Polymerisate und β-Hydroxyalkylamide als Vernetzer enthalten. Das molare Verhältnis von Carboxylgruppen zu Hydroxylgruppen beträgt bevorzugt 1:1. Nachteilig ist die relativ aufwendige Herstellung der β-Hydroxyalkylamide. Ein entsprechendes Bindemittel ist aus US-A 5 340 868 bekannt.

Aus der EP 445 578 sind Platten aus feinteiligen Materialien, wie z.B. Glasfasern bekannt, in denen Mischungen aus hochmolekularen Polycarbonsäuren und mehrwertigen Alkoholen, Alkanolaminen oder mehrwertigen Aminen als Bindemittel fungieren. Als hochmolekulare Polycarbonsäuren werden Polyacrylsäure, Copolymere aus Methylmethacrylat/n-Butylacrylat/Methacrylsäure und aus Methylmethacrylat/Methacrylsäure beschrieben. Als mehrwertige Alkohole bzw. Alkanolamine werden 2-Hydroxymethylbutandiol-1,4-, Trimethylolpropan, Glycerin, Poly(methylmethacrylat-co-Hydroxypropylacrylat), Diethanolamin und Triethanolamin eingesetzt. Maleinsäure wird als ein mögliches Comonomer zur Herstellung der hochmolekularen Polycarbonsäuren genannt.

Aus EP 583 086 sind formaldehydfreie, wäßrige Bindemittel zur Herstellung von Faservliesen, insbesondere Glasfaservliesen, bekannt. Diese Bindemittel benötigen einen Phosphor enthaltenden Reaktionsbeschleuniger, um ausreichende Festigkeiten der Glasfaservliese zu erreichen. Die Bindemittel enthalten eine Polycarbonsäure mit mindestens zwei Carbonsäuregruppen und gegebenenfalls auch Anhydridgruppen. Verwendung findet insbesondere Polyacrylsäure, auch Copolymere von Acrylsäure mit Maleinsäureanhydrid werden genannt. Das Bindemittel enthält weiterhin ein Polyol, z.B. Glycerin, Bis-[N,N-di(β-hydroxyethyl)adipamid, Pentaerythrit, Diethylenglykol, Ethylenglykol, Glukonsäure, β-D-Lactose, Sucrose, Polyvinylalkohol, Diisopropanolamin, 2-(2-Aminoethylamino)ethanol, Triethanolamin, Tris(hydroxymethylamino)methan und Diethanolamin. Es wird darauf hingewiesen, daß auf die Anwesenheit eines phosphorhaltigen Reaktionsbeschleunigers nur verzichtet werden kann, wenn ein hochreaktives Polyol eingesetzt wird. Als hochreaktive Polyole werden die β-Hydroxyalkylamide genannt.

In der EP-A 651 088 werden entsprechende Bindemittel für Substrate aus Cellulosefasern beschrieben. Diese Bindemittel enthalten zwingend einen Phosphor enthaltenden Reaktionsbeschleuniger.

Aus der DE 4 408 688 sind formaldehydfreie Bindemittel für faserförmige Flächengebilde bekannt. Als Bindemittel wird eine Mischung aus einer Polycarbonsäure und aromatischen oder cycloaliphatischen Polyolen eingesetzt. Trotz einer sehr hohen Trocknungstemperatur (230°C) werden mit diesem Bindemittel auf Glasfaservliesen nur geringe Naßreißfestigkeiten erzielt.

Neben bereits bekannten formaldehydfreien Bindemitteln besteht der Wunsch nach weiteren formaldehydfreien Bindemitteln. Aus wirtschaftlichen Gründen ist man bestrebt, die Verfestigung von flächenförmigen Fasergebilden bei möglichst niedrigen Temperaturen in einer möglichst kurzen Zeit durchzuführen und gleichzeitig gute mechanische Eigenschaften zu erhalten. Geeignete Bindemittel sollen weder an sich toxisch bedenklich sein, noch bei ihrer Verwendung toxische oder umweltschädliche Reaktionsprodukte ergeben.

Weiterhin sollen geeignete Bindemittel möglichst aus leicht zugänglichen und preiswerten Komponenten bestehen.

Aufgabe der vorliegenden Erfindung war daher, solche Bindemittel zur Verfügung zu stellen.

Demgemäß wurden die oben beschriebene Verwendung als Bindemittel für Faservliese, insbesondere Glasfaservliese, gefunden.

Das wäßrige Bindemittel enthält ein Polymerisat A), welches zu 5 bis 100 Gew.-%, bevorzugt 5 bis 50 Gew.-%, besonders bevorzugt 10 bis 40 Gew.-% aus einem ethylenisch ungesättigten Dicarbonsäureanhydrid oder einer ethylenisch ungesättigten Dicarbonsäure, deren Carbonsäuregruppen eine Anhydridgruppe bilden können, aufgebaut ist (im folgenden Monomere a) genannt).

Geeignete ethylenisch ungesättigte Dicarbonsäuren sind im allgemeinen solche mit Carbonsäuregruppen an benachbarten Kohlenstoffatomen. Die Carbonsäuregruppen können auch in Form ihrer Salze vorliegen.

Als Monomere a) werden bevorzugt Maleinsäure, Maleinsäureanhydrid, Itaconsäure, 1,2,3,6-Tetrahydrophthalsäure, 1,2,3,6-Tetrahydrophthalsäureanhydrid, deren Alkali- und Ammoniumsalze oder Mischungen daraus. Besonders bevorzugt sind Maleinsäure und Maleinsäureanhydrid.

Neben Monomeren a) kann das Polymerisat noch Monomere b) enthalten.

Als Monomere b) können beispielsweise eingesetzt werden:

Monoethylenisch ungesättigte C₃- bis C₁₀-Monocarbonsäuren, (Monomere b₁), wie z.B. Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze.

Lineare 1-Olefine, verzweigtkettige 1-Olefine oder cyclische Olefine (Monomere b₂), wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten.

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b₃), wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Acrylamide und alkylsubstituierte Acrylamide (Monomere b₄), wie z.B. Acrylamid, Methacrylamid, N-tert.-Butylacrylamid, N-Methyl(meth)acrylamid.

sulfogruppenhaltige Monomere (Monomere b₅), wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylester der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit Acrylsäure, Methacrylsäure oder Maleinsäure (Monomere b6), wie z.B. Mathyl(meth)acrylat, Ethyl (meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth) acrylat, Butandiol-1,4-monoacrylat, Maleinsäuredibutylester, Ethyldiglykolacrylat, Methylpolyglykolacrylat (11 EO), (Meth)acrylsäureester von mit 3,5.7,10 oder 30 Mol Ethylenoxid umgesetztem C₁₃/C₁₅-Oxoalkohol bzw. deren Mischungen.

Alkylaminoalkyl(meth)acrylate oder Alkylaminoalkyl(meth)acrylamide oder deren Quaternisierungsprodukte (Monomere b₇), wie z.B. 2-(N,N-Dimethylamino)ethyl (meth)acrylat, 3-(N,N-Dimethylamino)propyl(meth)acrylat, 2-(N, N,N-Trimethylammonium)ethyl (meth)acrylat-chlorid, 2-Dimethylaminoethyl(meth)acrylamid, 3-Dimethylaminopropyl (meth)acrylamid,3-Trimethylammoniumpropyl(meth)acrylamid-chlorid.

Vinyl- und Allylester von C₁- bis C₃₀-Monocarbonsäuren (Monomere b₈), wie z.B. Vinylformiat, Vinylacetat. Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere b₉ seien noch genannt:

N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol. 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Das Polymerisat kann neben Monomeren a) noch 0 bis 95 Gew.-% Monomere b enthalten. Bevorzugt enthält das Polymerisat neben Monomeren a) noch Monomere b in Mengen von 50 bis 95, besonders bevorzugt von 60 bis 90 Gew.-%.

Bevorzugte Monomere sind Acrylsäure, Methacrylsäure, Ethen, Propen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril bzw. Mischungen davon.

Besonders bevorzugt sind Acrylsäure, Methacrylsäure, Ethen, Acrylamid, Styrol und Acrylnitril bzw. Mischungen davon.

Ganz besonders bevorzugt sind Acrylsäure, Methacrylsäure und Acrylamid bzw. Mischungen davon.

Die Polymerisate können nach üblichen Polymerisationsverfahren hergestellt werden, z.B. durch Substanz-, Emulsions-, Suspensions-, Dispersions-, Fällungs- und Lösungspolymerisation. Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter Bevorzugt wird nach der Methode der Lösungs-, Emulsions-, Fällungs- oder Suspensionspolymerisation gearbeitet. Besonders bevorzugt sind die Methoden der Lösungs- und Emulsionspolymerisation. Die Polymerisation kann in Lösungs- oder Verdünnungsmitteln, wie z.B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen wie z.B. Isopropanol/Wasser-Mischungen ausgeführt werden. Vorzugsweise wird als Lösungs- oder Verdünnungsmittel Wasser gegebenenfalls mit Anteilen bis zu 60 Gew.-% an Alkoholen oder Glykolen verwendet. Besonders bevorzugt wird Wasser eingesetzt.

Die Polymerisation kann bei Temperaturen von 20 bis 300, vorzugsweise von 60 bis 200°C durchgeführt werden. Je nach Wahl der Polymerisationsbedingungen lassen sich gewichtsmittlere Molekulargewichte z.B. von 800 bis 5 000 000, insbesondere von 1 000 bis 1 000 000 einstellen. Bevorzugt liegen die gewichtsmittleren Molekulargewichte M_{w} über 15.000. Besonders bevorzugt sind gewichtsmittlere Molekulargewichte von 15 000 bis 600 000. M_{w} wird bestimmt durch Gelpermeationschromatographie (ausführliche Beschreibung in Beispielen).

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z.B. Redox-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis (2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxidisulfat. Für die Polymerisation in wäßrigem Medium werden bevorzugt wasserlösliche Initiatoren eingesetzt.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z.B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z.B. Ammoniumperoxidisulfat und Ammoniumdisulfit. Die Menge der peroxidhaltigen Verbindung zum Redox-Coinitiator beträgt 30:1 bis 0,05:1.

In Kombination mit den Initiatoren bzw. den Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salz sind z.B. Eisen-II-sulfat, Kobalt-II-chlorid, Nickel-II-sulfat, Kupfer-I-chlorid. Bezogen auf Monomeren wird das reduzierend wirkende Übergangsmetallsalz in einer Konzentration von 0,1 ppm bis 1 000 ppm eingesetzt. So kann man Kombinationen von Wasserstoffperoxid mit Eisen-II-salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren Redox-Coinitiatoren und/oder Übergangsmetalikatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an Redox-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Polymerisationsregler werden im allgemeinen in Mengen von 0,1 bis 10 Gew.-%, bezogen auf die Monomeren eingesetzt. Auch durch die Wahl des geeigneten Lösungsmittels kann auf das mittlere Molekulargewicht Einfluß genommen werden. So führt die Polymerisation in Gegenwart von Verdünnungsmitteln mit benzylischen H-Atomen zu einer Verringerung des mittleren Molekulargewichtes durch Kettenübertragung.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis (meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Wird in wäßriger Lösung oder Verdünnung polymerisiert, so können die Monomere vor oder während der Polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanolamin, Diisopropanolamin oder Morpholin in Frage.

Weiterhin können auch mehrbasische Amine zur Neutralisation eingesetzt werden, wie z.B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

Vorzugsweise werden zur partiellen oder vollständigen Neutralisation der ethylenische ungesättigten Carbonsäuren vor oder während der Polymerisation Ammoniak, Triethanolamin und Diethanolamin eingesetzt.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolamin B), zugesetzt. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat nach dem Verfahren einer Lösungspolymerisation in Wasser gewonnen, so ist üblicherweise keine Abtrennung des Lösungsmittels notwendig. Besteht dennoch der Wunsch, das Polymerisat zu isolieren, kann z.B. eine Sprühtrocknung durchgeführt werden.

Wird das Polymerisat nach der Methode einer Lösungs-, Fällungs-oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wäßrigen Lösung oder Dispersion zu gelangen. Das Polymerisat kann von dem organischen Verdünnungsmittel auch durch einen Trocknungsprozeß abgetrennt werden.

Bevorzugt liegen die Polymerisate A) in Form einer wäßrigen Dispersion oder Lösung mit Feststoffgehalten von vorzugsweise 10 bis 80 Gew.-%, insbesondere 40 bis 65 Gew.-% vor.

Polymerisat A) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE 4 003 172 und EP 116 930 beschrieben.

Als Komponente B) werden Alkanolamine mit mindestens zwei OH-Gruppen eingesetzt. Bevorzugt sind Alkanolamine der Formel 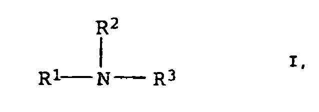 in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

Besonders bevorzugt stehen R² und R³ unabhängig voneinander für eine C₂-C₅-Hydroxyalkylgruppe und R¹ für ein H-Atom, eine C₁-C₅-Alkylgruppe oder eine C₂-C₅-Hydroxyalkylgruppe.

Als Verbindungen der Formel I seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Zur Herstellung der formaldehydfreien Bindemittel werden das Polymerisat A) und das Alkanolamin B) bevorzugt in einem solchen Verhältnis zueinander eingesetzt, daß das Molverhältnis von Carboxylgruppen der Komponente A) und der Hydroxylgruppen der Komponente B) 20:1 bis 1:1, bevorzugt 8:1 bis 5:1 und besonders bevorzugt 5:1 bis 1,7:1 beträgt (die Anhydridgruppen werden hierbei als 2 Carboxylgruppen berechnet).

Die Herstellung der formaldehydfreien, wäßrigen Bindemittel erfolgt z.B. einfach durch Zugabe des Alkanolamins zur wäßrigen Dispersion oder Lösung der Polymerisate A).

Die Bindemittel enthalten vorzugsweise weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus A) + B) eines Phosphor enthaltenden Reaktionsbeschleunigers. Phosphor enthaltende Reaktionsbeschleuniger sind in EP 651 088 und 583 086 genannt. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die Bindemittel enthalten vorzugsweise keine Phosphor enthaltenden Reaktionsbeschleuniger bzw keine zur Reaktionsbeschleunigung wirksame Mengen einer Phosphor enthaltenden Verbindung. Die erfindungsgemäßen Bindemittel können einen Veresterungskatalysator enthalten, wie z.B. Schwefelsäure oder p-Toluolsulfonsäure. Die erfindungsgemäßen Bindemittel können als Imprägnierungsmittel oder Beschichtungsmittel Verwendung finden. Die erfindungsgemäßen Bindemittel können einziger Bestandteil der Imprägnierungsmittel oder Beschichtungsmittel sein. Die Imprägnierungsmittel oder Beschichtungsmittel können jedoch auch noch weitere für die jeweilig beabsichtigte Verwendung geeignete Zusatzstoffe enthalten. In Betracht kommen z.B. Farbstoffe, Pigmente, Biozide, Plastifizierungsmittel, Verdickungsmittel, Haftverbesserer, Reduktionsmittel und Umesterungskatalysatoren.

Die erfindungsgemäßen Bindemittel haben nach Trocknung (bei 50°C, Dauer (72 Stunden) zu einem Film der Dicke 0,3 bis 1 mm und anschließender 15-minütiger Härtung bei 130°C an der Luft einen Gelgehalt über 50 Gew.-%, vorzugsweise über 60 Gew.-%, besonders bevorzugt über 70 Gew.-% und insbesondere über 75 Gew.-%.

Nach Abschluß der Härtung werden die gehärteten Filme 48 Stunden in Wasser bei 23°C gelagert. Lösliche Anteile verbleiben dabei im Wasser. Der Film wird dann bei 50°C bis zur Gewichtskonstanz getrocknet und gewogen. Das Gewicht entspricht dem Gelgehalt, der Gelgehalt wird berechnet in Gew.-%, bezogen auf das Gewicht vor Abtrennen der löslichen Anteile. Gewichtskonstanz ist erreicht, wenn die Gewichtsabnahme über einen Zeitraum von 3 Stunden weniger als 0,5 insbesondere weniger als 0,1 Gew.% beträgt.

Insbesondere eignen sich die Bindemittel als Bindemittel für Faservliese. Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern genannt.

Im Falle der Verwendung als Bindemittel für Faservliese können die Bindemittel z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d.h. verfestigt.

Dazu wird das Bindemittel vorzugsweise im Gewichtsverhältnis Faser/Polymerisat A (fest) von 10:1 bis 1:1, besonders bevorzugt von 6:1 bis 3:1 auf das Rohfaservlies z.B. durch Beschichten, Imprägnieren, Tränken aufgebracht.

Das Bindemittel wird dabei vorzugsweise in Form einer verdünnten wäßrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Eine Vergilbung des gebundenen Faservlieses nach der Trocknung ist nicht bzw. kaum zu beobachten. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC. PVC-Fußbodenbeläge, die unter Verwendung von mit den erfindungsgemäßen Bindemitteln verfestigten Glasfaservliesen und PVC-Plastisolen hergestellt wurden, weisen eine nur geringe Vergilbungsneigung auf.

Bei der Verwendung als Dachbahnen werden die gebundenen Faservliese im allgemeinen mit Bitumen beschichtet.

Die Bindemittel können auch in Abmischung mit weiteren Bindemitteln, wie z.B. formaldehyd-enthaltenden Bindemitteln wie Harnstoff-Formaldehyd-Harzen, Melamin-Formaldehyd-Harzen oder Phenol-Formaldehyd-Harzen, eingesetzt werden.

Die Bindemittel können weiterhin als Bindemittel für Dämmstoffe aus den oben genannten Fasern, insbesondere anorganischen Fasern wie Mineralfasern und Glasfasern verwendet werden.

Die in der Praxis bisher üblichen Bindemittel auf Basis von Phenol-Formaldehyd-Kondensationsharzen haben den Nachteil, daß sich bei der Herstellung der Dämmstoffe nicht unerhebliche Mengen Phenol, Formaldehyd sowie niedermolekulare Kondensationsprodukte davon verflüchtigen. Die Zurückhaltung dieser umweltschädlichen Stoffe ist mit großem Aufwand verbunden. Weiterhin kann es zur Freisetzung von Formaldehyd aus den fertigen Dämmstoffprodukten kommen, was insbesondere bei einer Verwendung in Wohngebäuden unerwünscht ist.

Fasern für Dämmstoffe werden technisch in großem Umfang durch Verspinnen von Schmelzen der entsprechenden mineralischen Rohstoffe hergestellt (siehe z.B. EP 567 480).

Die wäßrige Bindemittel-Lösung wird bei der Herstellung von Dämmstoffen vorzugsweise schon auf die frisch hergestellten, noch heißen Fasern aufgesprüht. Das Wasser verdampft überwiegend und das Harz bleibt im wesentlichen unausgehärtet als viskoses "high-solid" Material auf den Fasern haften. Aus den Fasern werden so bindemittelhaltige Fasermatten hergestellt und diese von geeigneten Förderbändern durch einen Härtungsofen weitertransportiert. Dort härtet das Harz bei Ofentemperaturen von ca. 150 bis 350°C zu einer steifen, duroplastischen Matrix aus. Nach dem Härtungsofen werden die Dämmstoffmatten in geeigneter Weise konfektioniert, d.h. in eine für den Endanwender geeignete Form zugeschnitten.

Die Bindemittel können in der Praxis der Dämmstoffherstellung übliche Hilfs- und Zusatzstoffe enthalten. Beispiele dafür sind Hydrophobierungsmittel wie z.B. Silikonöle, Alkoxysilane wie z.B. 3-Aminopropyltriethoxysilan als Kupplungsagens, lösliche oder emulgierbare Öle als Gleitmittel und Staubbindemittel sowie Benetzungshilfsmittel.

Der überwiegende Anteil der in den Dämmstoffen verwendeten Mineral- oder Glasfasern hat einen Durchmesser zwischen 0,5 und 20 µm und eine Länge zwischen 0,5 und 10 cm.

Übliche Anwendungsformen der Dämmstoffe sind rechteckige oder dreieckige Dämmstoffplatten sowie aufgerollte Dämmstoffbahnen. Die Dicke und Dichte der Dämmstoffe kann in weiten Grenzen variiert werden, wodurch sich Produkte mit der gewünschten Isolationswirkung herstellen lassen. Übliche Dicken liegen zwischen 1 und 20 cm, übliche Dichten im Bereich zwischen 20 und 300 kg/m³. Die Isolierwirkung wird die durch die thermische Leitfähigkeit Lambda (in mW/m°K) charakterisiert. Die Dämmplatten haben eine hohe Trocken- und Naßfestigkeit.

Die Bindemittel eignen sich auch zur Herstellung von Topfreinigern bzw. Topfkratzern auf Basis von gebundenen Faservliesen. Als Fasern kommen natürliche Fasern und synthetische Fasern, insbesondere auf Mineralfasern oder Glasfasern in Betracht. Im Falle der Topfreiniger bzw. -kratzer erfolgt die Verfestigung der Faservliese bevorzugt im Sprühverfahren.

### Beispiele

### Herstellung der wäßrigen Bindemittel

Die Polymerisatlösungen wurden gemäß Tabelle 1 in der jeweils angegebenen Menge mit der angegebenen Menge Triethanolamin (TEA) gemischt. Angegeben ist auch der Feststoffgehalt des Bindemittels, der pH-Wert und die Viskosität.

**Tabelle 1**

| Bindemittel | Polymerisat [g] | TEA [g] | Feststoffgehalt [%] | pH | Viskosität [mPas] |
|---|---|---|---|---|---|
| A | 882.0 | 117,2 | 49,4 | 2,9 | 7100 |
| | Cop. AS/MS¹ 80:20 | | | | |
| B | 875.0 | 125,0 | 46,8 | 3,2 | 5 400 |
| | Cop. AS/MS² 85:15 | | | | |
| C | 882.0 | 118,0 | 49,4 | 2,9 | 3 700 |
| | Cop. AS/MS³ 75:25 | | | | |
| D | 891.9 | 108,1 | 45,1 | 3,3 | 4 900 |
| | Cop. AS/MS⁴ 90:10 | | | | |
| E | 894.8 | 105,2 | 44,0 | 2,8 | 2 800 |
| | Cop. AS/MS⁵ 70:30 | | | | |
| F | 884.3 | 115,7 | 48,5 | 2,3 | 800 |
| | Cop. AS/MS⁶ 60:40 | | | | |
| G | 881.5 | 118,5 | 50,8 | 3,0 | 2 400 |
| | Cop. AS/MS⁷ 80:20 | | | | |
| H | 880.1 | 119,9 | 50,2 | 2,9 | 900 |
| | Cop. AS/MS⁸ 70:30 | | | | |
| I | 886.7 | 113,3 | 46,4 | 2,5 | 440 |
| | Cop. AS/MS⁹ 60:40 | | | | |
| K | 928.2 | 71,8 | 29,9 | 3,3 | 10800 |
| | EMA¹⁰ | | | | |
| L | 925.3 | 74,7 | 30,8 | 3,2 | 14 200 |
| | MSA/V1¹¹ | | | | |
| M | 924.7 | 75,3 | 43,7 | 3,7 | 2700 |
| | Cop. AS/MS¹² 70:30 | | | | |
| N | 891.2 | 108,8 | 45,4 | 2,9 | 2400 |
| | Cop. AS/MS¹³70:30 | | | | |
| O | 860.3 | 139,7 | 47,5 | 2,4 | 2300 |
| | Cop. AS/MS¹⁴ 70:30 | | | | |
| P | 905.0 | 95,0 | 40,4 | 3,5 | 2100 |
| | Poly-AS¹⁵ | | | | |
| Q | 928.2 | 71,8 | 29,9 | 3,0 | 280 |
| | Cop. MAS/AS¹⁶ | | | | |
| Abkürzungen AS: Acrylsäure EMA: Copolymer Ethylen/Maleinsäure FG: Feststoffgehalt MAS: Methacrylsäure MS: Maleinsäure M_{w}: gewichtsmittleres Molekulargewicht TEA: Triethanolamin V1: Methylvinylether | | | | | |

| | | | | | |
|---|---|---|---|---|---|
| ¹: Copolymer Acrylsäure/Maleinsäure 80:20 Gew.-%, M_{w} 160 000, polymerisiert bei 110°C mit Wasserstoffperoxid als Radikalinitiator, entsprechend EP 75 820. FG: 44,5 %, pH: 0,8 ²: Herstellung analog Copolymer 1, FG: 40,5 %, pH: 1,1, M_{w}: 240 000 ³: Herstellung analog Copolymer 1, FG: 44,6 %, pH: 0,7, M_{w}: 90 000 ⁴: Herstellung analog Copolymer 1, FG: 40,4 %, pH: 1,1, M_{w}: 205 000 ⁵: Herstellung analog Copolymer 1, FG: 39,2 %, pH: 2,7, M_{w}: 84 000 ⁶: Herstellung analog Copolymer 1, Mw: FG: 43,6 %, pH: 1,0, M_{w}: 25 000 ⁷: polymerisiert bei 130°C mit Wasserstoffperoxid als Radikalinitiator entsprechend EP 75 820. FG: 44,8 %, pH: 0,8, M_{w}: 80 000 ⁸: polymerisiert bei 130°C mit Wasserstoffperoxid als Radikalinitiator entsprechend EP 75 820. FG: 45,4 %, pH: 1,4, M_{w}: 27 000 ⁹: polymerisiert bei 130°C mit Wasserstoffperoxid als Radikalinitiator entsprechend EP 75 820. FG: 42,6 %, pH: 0,7, M_{w}: 15 000 ¹⁰: Mw: 820.000, FG: 21,6, pH: 4,6 ¹¹: Mw: 1000.000, FG: 23,5, pH: 5,1 ¹²: Herstellung analog Copolymeres 5, FG: 40,7 %, pH: 2,5, M_{w}: 80 000 ¹³: Herstellung analog Copolymeres 5, FG: 40,7 %, pH: 2,5, M_{w}: 80 000 ¹⁴: Herstellung analog Copolymeres 5, FG: 40,7 %, pH: 2,5, M_{w}: 80 000 ¹⁵: Polyacrylsäure, Mw: 100.000, FG: 35,0 %, pH: 1,0, zum Vergleich ¹⁶: Copolymer Acrylsäure/Methacrylsäure 30:70 Gew.-%, Mw: 22.000, FG: 25,8 %, pH: 1,4, zum Vergleich. | | | | | |

### Bestimmung des mittleren Molekulargewichtes:

Die Bestimmung des gewichtsmittleren Molekulargewichtes erfolgte durch Gelpermeationschromatographie (GPC) mit wäßrigen Elutionsmitteln. Die Kalibrierung erfolgte mit einer breit verteilten Na-Polyacrylat-Mischung, deren integrale Molekulargewichtsverteilungskurve durch GPC-Laserlichtstreukopplung bestimmt worden war, nach dem Kalibrierverfahren von M.J.R. Cantow et al. (J. Polym. Sci., A-1,5 (1967) 1391-1394), allerdings ohne die dort vorgeschlagene Konzentrationskorrektur. Als Elutionsmittel wurde eine wäßrige Tris(hydroxymethyl)aminomethan (TRIS)-Pufferlösung (0,08 molar) eingesetzt. Die Chromatographiesäulen waren mit TSK PW-XL 3000 und TSK PW-XL 5000 (Fa. TosoHaas) als stationäre Phase beladen. Zur Detektion wurde ein Differentialrefraktometer eingesetzt.

### Bestimmung des Feststoffgehaltes:

In ein Alu-Schälchen werden eine definierte Menge der Probe eingewogen (Einwaage). Die Probe wird im Trockenschrank bei 50°C 72 Stunden getrocknet. Danach wird erneut die Masse der Probe bestimmt (Auswaage). Der prozentuale Feststoffgehalt FG errechnet sich wie folgt: FG = Auswaage x 100/Einwaage [%].

### Bestimmung der Viskosität:

Die Lösungsviskosität wurde mit einem LVF Viskosimeter der Fa. Brookfield bestimmt. Die Proben wurden zuvor auf 23°C temperiert.

### Anwendungstechnische Prüfungen

### Glasfaservliese

Die Bindemittellösungen A bis Q wurden mit Wasser auf einen Gesamtfeststoffanteil von 15 Gew.-% verdünnt und in eine Imprägnierwanne gefüllt. Als Rohvlies wurden mit Melaminformaldehyd-Harzen leicht vorgebundene Glasfaservliese (ca. 7 % Bindemittelauftrag, Flächengewicht ca. 50 g/m²) im Format 26,5 x 32,5 cm verwendet. Nach 2 x 20 sec. Eintauchen in die Imprägnierflotte wurde der Überschuß an Bindemittel bis zum Erreichen eines Bindemittelanteiles von 20 % (bezogen auf das Gesamtgewicht) abgesaugt und das imprägnierte Glasvlies in einem Mathis-Ofen eine vorgegebene Zeit (t) bei der eingestellten Temperatur (T) (s. Tabelle 2) getrocknet. Aus dem Glasfaserbogen wurden 50 mm breite Streifen abgeschnitten und in einer Zugprüfmaschine mit 50 mm/min bis zum Reißen gedehnt (Reißkraft, RK, trocken). Die Temperatur des Faservlieses ist in Tabelle 2 angegeben. Entsprechende Prüfstreifen wurden zur Messung der Naßfestigkeit vor Prüfung 15 min in Wasser bei 25 bzw. 80°C gelegt und im feuchten Zustand bei der angegebenen Temperatur gerissen (RK, naß). Die Ergebnisse der Messungen (Mittelwert von 5 Prüfkörpern) sind in Newton (N) angegeben und beziehen sich auf 50 mm Prüfstreifenbreite.

Zur Ermittlung des Kochverlustet (KV) wurde die Abnahme des Vliesgewichtes nach 15 min Auskochen in destilliertem Wasser bestimmt.

Die Vergilbung wurde qualitativ beurteilt.

Die Ergebnisse sind in Tabelle 2 aufgeführt.

**Tabelle 2**

| Beispiel Nr. | Bindemittel | Trocknungstemp. [°C] | Trocknungsdauer [sec.] | RK, trocken bei 25°C [N] | RK, naß bei 25°C [N] | RK, naß bei 80°C [N] | RK,trocken bei 180°C [N] | KV [%] | Vergilbung |
|---|---|---|---|---|---|---|---|---|---|
| 17 | A | 180 | 25 | 188 | 78 | 45 | 143 | 3,9 | keine |
| 18 | A | 180 | 30 | 184 | 88 | 46 | 139 | 2,5 | keine |
| 19 | A | 180 | 60 | 207 | 165 | 89 | 159 | 1,4 | keine |
| 20 | A | 180 | 90 | 210 | 176 | 114 | 130 | 1,1 | keine |
| 21 | A | 180 | 120 | 202 | 186 | 130 | 154 | 0.5 | keine |
| 22 | B | 180 | 120 | 197 | 187 | 119 | 153 | 1.1 | keine |
| 23 | C | 180 | 120 | 189 | 180 | 125 | 157 | 0,8 | keine |
| 24 | D | 180 | 120 | 202 | 168 | 122 | 152 | 0,9 | keine |
| 25 | E | 180 | 120 | 205 | 185 | 135 | 149 | 1,5 | keine |
| 26 | F | 180 | 120 | 188 | 184 | 127 | 139 | 1,9 | keine |
| 27 | G | 180 | 120 | 207 | 168 | 116 | 160 | 1,2 | keine |
| 28 | G | 200 | 120 | 181 | 181 | 140 | 146 | 0,6 | ja |
| 29 | H | 180 | 120 | 197 | 165 | 128 | 131 | 2,7 | keine |
| 30 | H | 200 | 120 | 198 | 175 | 145 | 129 | 0,8 | ja |
| 31 | I | 180 | 120 | 188 | 155 | 101 | 132 | 1,8 | keine |
| 32 | K | 180 | 120 | 220 | 186 | 130 | 150 | 0,5 | keine |
| 33 | L | 180 | 120 | 223 | 194 | 74 | 142 | 1,3 | ja |
| 34 | M | 180 | 120 | 196 | 187 | 89 | 152 | 1,2 | keine |
| 35 | N | 180 | 120 | 195 | 194 | 132 | 146 | 1,4 | keine |
| 36 | O | 180 | 120 | 199 | 174 | 114 | 141 | 1,5 | keine |
| 37 | P | 180 | 120 | 191 | 108 | 62 | 127 | 2,6 | keine |
| 38 | Q | 180 | 20 | 147 | 61 | 48 | 158 | 16,0 | keine |
| 39 | Q | 180 | 30 | 145 | 63 | 46 | 166 | 17,0 | keine |
| 40 | Q | 180 | 60 | 162 | 88 | 61 | 162 | 2,8 | keine |
| 41 | Q | 180 | 90 | 170 | 105 | 74 | 161 | 1,5 | keine |
| 42 | Q | 180 | 120 | 176 | 126 | 80 | 156 | 2.0 | keine |
| 43 | Q | 200 | 120 | 187 | 167 | 144 | 158 | 1,3 | ja |

### Beispiele 37 bis 43 zum Vergleich

### Bestimmung des Gelgehalts

### Bindemittel R:

| | |
|---|---|
| 150 g | eines Copolymerisates aus 80AS/20 MS (Copolymerisat 1) und |
| 30 g | Triethanolamin wurden zusammengegeben. |

Die Mischung wird in eine Silikonform gegossen und bei 50°C im Umluftofen getrocknet. Die Dicke des entstehenden Filmes liegt zwischen 0,5 und 1 mm.

Etwa 1 g des so hergestellten Filmes werden 15 min bei 130°C gehärtet. Der gehärtete Film wird 48 h in destilliertem Wasser bei 23°C gelagert.

Aus dem Gewicht des wassergelagerten Filmes nach Rücktrocknung bis zur Gewichtskonstanz im Verhältnis zum ursprünglichen Gewicht des Filmes wird der Gelanteil berechnet als Verhältnis.

### Gelanteil: 83 %

### Dämmstoffe

### Beispiel 44: Herstellung eines Prüfkörpers aus Basalt-Schmelzperlen mit Bindemittel R

300 g Basaltmehl-Schmelzperlen werden mit 30,6 g Bindemittel R vermischt. Aus der Mischung wird ein Prüfkörper (Fischer-Riegel) mit den Abmessungen 17 x 2,3 x 2,3 cm geformt und 2 h bei 200°C ausgehärtet.

Ein so hergestellter Fischerriegel wird im trockenen Zustand bei 23°C im Dreipunktbiegeversuch geprüft. Bei diesem Biegeversuch liegt der Prüfkörper auf 2 Punkten auf und in der Mitte wird eine Kraft ausgeübt, bis der Prüfkörper bricht (Biegefestigkeit ≙ Kraft beim Brechen, bezogen auf die Querschnittsfläche).
Biegefestigkeit trocken: 740 N/mm2

Ein weiterer Fischer-Riegel wird eine Stunde in destilliertem Wasser bei 23°C gelagert. Bestimmt wird die Wasseraufnahme des Prüfkörpers und seine Biegefestigkeit im nassen Zustand bei 23°C.

| | |
|---|---|
| Wasseraufnahme | 21,7 Gew.-% |
| Biegefestigkeit naß | 620 N/mm2 |

### Beispiel 45: (zum Vergleich)

Beispiel 44 wurde wiederholt mit der Ausnahme, daß Bindemittel R gegen ein handelsübliches Phenol-Formaldehydharz (Kauresin® 259 Leim flüssig) ausgetauscht wurde

| | |
|---|---|
| Biegefestigkeit trocken | 850 N/mm² |
| Wasseraufnahme | 22 Gew.% |
| Biegefestigkeit naß | 690 N/mm² |

## Patentansprüche

1. Verwendung von formaldehydfreien, wäßrigen Bindemitteln, enthaltend
A) ein durch radikalische Polymerisation erhaltenes Polymerisat, welches zu 5 bis 100 Gew.-% aus einem ethylenisch ungesättigten **Dicarbonsäureanhydrid** oder einer ethylenisch ungesättigten Dicarbonsäure, deren Carbonsäuregruppen eine Anhydridgruppe bilden können, besteht und
B) ein Alkanolamin mit mindestens zwei Hydroxylgruppen, wobei das wäßrige Bindemittel weniger als 1,5 Gew.-%, bezogen auf die Summe von A) + B), eines Phosphor enthaltenden Reaktionsbeschleunigers enthält
als Bindemittel für Faservliese.

2. Verwendung gemäß Anspruch 1, wobei das Bindemittel weniger als 0,3 Gew.-% eines Phosphor enthaltenden Reaktionsbeschleunigers enthält.

3. Verwendung gemäß Anspruch 1, wobei die Bindemittel nach Trocknung (bei 50°C, Dauer 72 Stunden) zu einem Film der Dicke 0,3 bis 1 mm und anschließender 15-minütiger Härtung bei 130°C an der Luft einen Gelgehalt über 50 Gew.-% haben.

4. Verwendung gemäß einem der Ansprüche 1 bis 3, wobei das Polymerisat zu 5 bis 100 Gew.-% aus Maleinsäure oder Maleinsäureanhydrid aufgebaut ist.

5. Verwendung gemäß einem der Ansprüche 1 bis 4, wobei es sich bei dem Alkanolamin um eine Verbindung 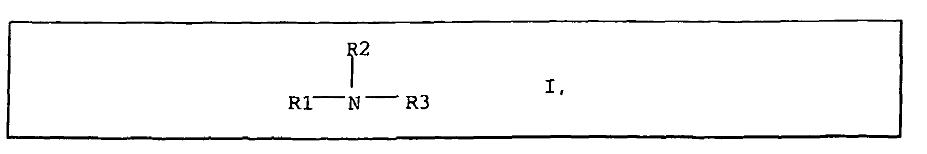 handelt, in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

6. Verwendung gemäß einem der Ansprüche 1 bis 5, wobei es sich bei dem Alkanolamin um Triethanolamin handelt.

7. Verwendung gemäß einem der Ansprüche 1 bis 6, wobei das Molverhältnis der Carboxylgruppen und Säureanhydridgruppen (1 Säureanhydridgruppe berechnet als 2 Carboxylgruppen) von A) zu den Hydroxylgruppen von B) 20:1 bis 1:1 beträgt.

8. Verwendung der formaldehydfreien, wäßrigen Bindemittel gemäß einem der Ansprüche 1 bis 7 als Bindemittel für Glasfaservliese.

9. Verfahren zur Herstellung von gebundenen Faservliesen, **dadurch gekennzeichnet, daß** Faservliese mit einem wäßrigen Bindemittel gemäß einem der Ansprüche 1 bis 7 beschichtet oder getränkt und anschließend getrocknet werden.

10. Verfahren gemäß Anspruch 9 zur Herstellung von gebundenen Glasfaservliesen.

11. Gebundene Faservliese, erhältlich durch Verwendung eines formaldehydfreien, wäßrigen Bindemittels gemäß einem der Ansprüche 1 bis 7.

12. Gebundene Glasfaservliese, erhältlich unter Verwendung eines formaldehydfreien, wäßrigen Bindemittels gemäß einem der Ansprüche 1 bis 7.

13. Dachbahnen, enthaltend gebundene Faservliese gemäß Anspruch 11.

14. Dachbahnen, enthaltend gebundene Glasfaservliese gemäß Anspruch 12.

15. Dämmaterialien, enthaltend gebundene Faservliese gemäß Anspruch 11.

16. Dämmaterialien, enthaltend gebundene Glasfaservliese gemäß Anspruch 12.

17. Fußbodenbeläge, enthaltend gebundene Faservliese gemäß Anspruch 11.

18. Fußbodenbeläge, enthaltend gebundene Glasfaservliese gemäß Anspruch 12.

19. Verwendung von gebundenen Faservliesen gemäß Anspruch 11 in oder als Topfreiniger.

20. Formaldehydfreie, wäßrige Bindemittel, enthaltend
A) ein durch radikalische Polymerisation erhaltenes Polymerisat, welches zu 5 bis 100 Gew.-% aus einem ethylenisch ungesättigten **Dicarbonsäureanhydrid** oder einer ethylenisch ungesättigten Dicarbonsäure, deren Carbonsäuregruppen eine Anhydridgruppe bilden können, besteht und welcher als wäßrige Lösung vorliegt und
B) ein Alkanolamin mit mindestens zwei Hydroxylgruppen, wobei das wäßrige Bindemittel weniger als 1,5 Gew.-%, bezogen auf die Summe von A) + B), eines Phosphor enthaltenden Reaktionsbeschleunigers enthält und wobei
die Bindemittel nach Trocknung (bei 50°C, Dauer 72 Stunden) zu einem Film der Dicke 0,3 bis 1 mm und anschließender 15-minütiger Härtung bei 130°C an der Luft einen Gelgehalt über 50 Gew.-% haben.

## Claims

1. The use of formaldehyde-free aqueous binder comprising
A) a free-radically polymerized polymer containing from 5 to 100 % by weight of units derived from an ethylenically unsaturated dicarboxylic anhydride or from an ethylenically unsaturated dicarboxylic acid whose carboxyl groups can form an anhydride group, and
B) an alkanolamine having at least two hydroxyl groups, the aqueous binder comprising less than 1.5 % by weight, based on the sum of A) + B), of a phosphorus-comprising reaction accelerant
as a binder for fiber webs.

2. The use according to claim 1, wherein the binder comprises less than 0.3 % by weight of a phosphorus-comprising reaction accelerant.

3. The use according to claim 1, wherein the binders dry at 50°C in 72 hours to a film from 0.3 to 1 mm in thickness and, following a subsequent 15 minutes' cure at 130°C in air, having a gel content of above 50 % by weight.

4. The use according to any of claims 1 to 3, wherein the polymer contains from 5 to 100 % by weight of units derived from maleic acid or maleic anhydride.

5. The use according to any of claims 1 to 4, wherein the alkanolamine is a compound 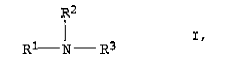 where R¹ is hydrogen, C₁-C₁₀-alkyl or C₁-C₁₀-hydroxyalkyl and R² and R³ are each C₁-C₁₀-hydroxyalkyl.

6. The use according to any of claims 1 to 5, wherein the alkanolamine is triethanolamine.

7. The use according to any of claims 1 to 6, wherein the molar ratio of the carboxyl groups and anhydride groups (1 anhydride group calculated as 2 carboxyl groups) of A) to the hydroxyl groups of B) is within the range from 20:1 to 1:1.

8. The use of the formaldehyde-free aqueous binders according to any one of claims 1 to 7 as binders for glass fiber webs.

9. A process for producing bonded fiber webs, which comprises coating or impregnating fiber webs with an aqueous binder according to any of claims 1 to 7 and drying.

10. The process according to claim 9 for producing bonded glass fiber webs.

11. A bonded fiber web obtainable by using a formaldehyde-free aqueous binder according to any one of claims 1 to 7.

12. A bonded glass fiber web obtainable by using a formaldehyde-free aqueous binder according to any one of claims 1 to 7.

13. A roofing membrane comprising bonded fiber webs according to claim 11.

14. A roofing membrane comprising bonded glass fiber webs according to claim 12.

15. An insulating material comprising bonded fiber webs according to claim 11.

16. An insulating material comprising bonded glass fiber webs according to claim 12.

17. A floor covering comprising bonded fiber webs according to claim 11.

18. A floor covering comprising bonded glass fiber webs according to claim 12.

19. The use of bonded fiber webs according to claim 11 in or as saucepan cleaners.

20. A formaldehyde-free aqueous binder comprising
A) a free-radically polymerized polymer which is present as aqueous solution and which contains from 5 to 100 by weight of units derived from an ethylenically unsaturated dicarboxylic anhydride or from an ethylenically unsaturated dicarboxylic acid whose carboxyl groups can form an anhydride group, and
B) an alkanolamine having at least two hydroxyl groups, the aqueous binder comprising less than 1.5 % by weight, based on the sum of A) + B), of a phosphorus-comprising reaction accelerant,
said binder drying at 50°C in 72 hours to a film from 0.3 to 1 mm in thickness and, following a subsequent 15 minutes' cure at 130°C in air, having a gel content of above 50 % by weight.

## Revendications

1. Utilisation de liants aqueux exempts de formaldéhyde, contenant
A) un polymère obtenu par polymérisation radicalaire, constitué à 5-100% en poids d'un anhydride d'acide dicarboxylique à insaturation éthylénique ou d'un acide dicarboxylique à insaturation éthylénique, dont les groupements carboxyliques peuvent former un groupement anhydride, et
B) une alcanolamine ayant au moins deux groupements hydroxyle, où le liant aqueux contient moins de 1,5% en poids, par rapport à la somme de A) + B), d'un accélérateur de réaction contenant du phosphore,en tant que liant pour non tissés.

2. Utilisation selon la revendication 1, où le liant contient moins de 0,3% en poids d'un accélérateur de réaction contenant du phosphore.

3. Utilisation selon la revendication 1 ou 2, où le liant présente une teneur en gel supérieure à 50% en poids après 15 minutes de séchage à 130°C.

4. Utilisation selon l'une quelconque des revendications 1 à 3, où le polymère est formé pour 5 à 100% en poids à partir d'acide maléique ou d'anhydride maléique.

5. Utilisation selon l'une quelconque des revendications 1 à 4, où l'alcanolamine est un composé
dans laquelle R¹ est mis pour un atome H, un groupement alkyle en C₁-C₁₀, ou un groupement hydroxyalkyle en C₁-C₁₀, et R² et R³ sont mis pour un groupement hydroxyalkyle en C₁-C₁₀.

6. Utilisation selon l'une quelconque des revendications 1 à 5, où l'alcanolamine est la triéthanolamine.

7. Utilisation selon l'une quelconque des revendications 1 à 6, où le rapport en moles des groupements carboxyle et anhydride d'acide (1 groupement anhydride d'acide étant compté pour deux groupements carboxyle) de A) aux groupements hydroxyle de B) vaut de 20:1 à 1:1.

8. Utilisation d'un liant aqueux exempt de formaldéhyde selon l'une quelconque des revendications 1 à 7, en tant que liant pour des non tissés en fibre de verre.

9. Procédé de préparation de non tissés liés, **caractérisé en ce que** les non tissés sont enduits ou imprégnés avec un liant aqueux selon l'une quelconque des revendications 1 à 7, puis ils sont séchés.

10. Procédé selon la revendication 9 pour la préparation de non tissés en fibres de verres liés.

11. Non tissés liés, pouvant être obtenus par utilisation d'un liant aqueux exempt de formaldéhyde selon l'une quelconque des revendications 1 à 7.

12. Non tissés liés en fibres de verre, pouvant être obtenus par utilisation d'un liant aqueux exempt de formaldéhyde selon l'une quelconque des revendications 1 à 7.

13. Bandes pour toitures contenant des non tissés liés selon la revendication 11.

14. Bandes pour toitures contenant des non tissés liés en fibres de verre selon la revendication 12.

15. Matériaux isolants contenant des non tissés liés selon la revendication 11.

16. Matériaux isolants contenant des non tissés liés en fibre de verre selon la revendication 12.

17. Revêtements de sols contenant des non tissés liés selon la revendication 11.

18. Revêtements de sols contenant des non tissés liés en fibre de verre selon la revendication 12.

19. Utilisation de non tissés liés selon la revendication 11 dans ou en tant que nettoyeur de pots.

20. Liant aqueux exempt de formaldéhyde, contenant
A) un polymère obtenu par polymérisation radicalaire, constitué à 5-100% en poids d'un anhydride d'acide dicarboxylique à insaturation éthylénique ou d'un acide dicarboxylique à insaturation éthylénique, dont les groupements carboxyliques peuvent former un groupement anhydride, et qui se présente sous forme de solution aqueuse et
B) une alcanolamine ayant au moins deux groupements hydroxyle, où le liant aqueux contient moins de 1,5% en poids, par rapport à la somme de A) + B), d'un accélérateur de réaction contenant du phosphore, et où le liant présente une teneur en gel supérieure à 50% en poids, après séchage (à 50°C, durée : 72 heures) pour donner un film d'une épaisseur de 0,3 à 1 mm suivi d'un durcissement de 15 minutes à 130°C à l'air.
